# EUROPEAN PATENT APPLICATION

(11) **EP 1 953 668 A2**
(43) Date of publication of application: **06.08.2008**
(21) Application number: 08250317.8
(22) Date of filing: 25.01.2008
(51) Int. Cl.: G06F 21/02

(54) **System and method of data encryption and data access of a set of storage devices via a hardware key**

(30) Priority: 30.01.2007 US 669092; 21.03.2007 US 689467
(71) Applicant: Technology Properties Limited, Cupertino, CA 95014 (US)
(72) Inventor: Iyer, Sree M., San Jose California 95135 (US); Antonopoulos, Nicholas, San Jose California 95118 (US); Kumar, Santosh, Santa Clara California 95051 (US)
(74) Representative: Beresford, Keith Denis Lewis

(57) **Abstract**

Systems and methods of storage device data encryption and data access via a hardware key are described here. One embodiment includes a hardware key to intercept a request sent from a host to a storage device to access data stored on one of a set of storage devices, wherein the data stored on the storage device has been encrypted. The hardware key is configured to be plugged into a port of the host and comprising a unit to control data access to the set of storage devices. The hardware key is to interpret the request and issue a command to the one of the set of storage devices, to access the encrypted data. The hardware key is to provide an encryption key to decipher the encrypted data from the one of the set of storage devices.

## Description

### TECHNICAL FIELD

The present disclosure relates generally to a system and method of data encryption and data access of a set of storage devices via a hardware key.

### BACKGROUND

With increased usage of portable electronic devices, security of data stored on storage devices has become imperative as personal privacy and confidentiality can be jeopardized upon unauthorized access of electronic devices. While passwords (e.g., operating system log on password, BIOS password, etc.) have prevented unauthorized users from logging on to a host device (e.g., a laptop computer), the contents of the storage device can be compromised upon removal of the device from the host system. For example, a data hacker may physically remove the storage device and move it to another host device to which the data hacker has authorization for access.

Thus, there is a need for a security technique that encrypts data stored on the storage devices to be used to protect data on the storage device even if the operating system on a host system is not active. For example, if the data is attempted to be read directly from the storage device, the request to access is authorized prior to decryption of the data on the storage device to be accessed.

Additionally, the location where the encryption key that encrypts data on the storage device is stored affects the security of encrypted storage device. If the encryption key is stored on a storage device in the host system, the security of the encryption key may be compromised when the host system is lost or stolen. For example, if data on the storage device is read directly and the location of the stored encryption key is known by the hacker. Data security can thus be compromised due to the encryption key residing on the system.

In addition, data integrity, fault-tolerance, throughput, and storage capacity are also important for storage systems. Thus, a redundant array of independent disks (RAID) may be used to share or replicate data among multiple hard disk drives. Furthermore, a set of hard disk drives can be combined into a single logical unit. Due to the data capacity of an array of multiple hard disk drives, security of data through encryption can significantly improve system reliability and decrease the risk of data being stolen.

### SUMMARY OF THE DESCRIPTION

Systems and methods of data encryption and data access of a set of storage devices via a hardware key are described here. Some embodiments of the present invention are summarized in this section.

One embodiment includes a hardware key to intercept a request sent from a host to a storage device to access data stored on one of a set of storage devices, wherein the data stored on the storage device has been encrypted. The hardware key is configured to be plugged into a port of the host , and to control data access to the set of storage devices. The hardware key is to interpret the request and issuing a command to the one of the set of storage devices, to access the encrypted data. The hardware key is to provide the encryption key to decipher the encrypted data from the one of the set of storage devices. In one embodiment, the set of storage devices comprises a Redundant Array of Independent Disks (RAID) subsystem.

In one embodiment the hardware key is to further intercept a reply from the storage device, the reply to include encrypted data from the storage device; and the hardware key to use the encryption key to decipher the encrypted data. Furthermore, in one embodiment, the hardware key comprises a USB key.

The present disclosure includes methods and apparatuses which perform these methods, including processing systems which perform these methods, and computer readable media which when executed on processing systems cause the systems to perform these methods.

Other features of the present invention will be apparent from the accompanying drawings and from the detailed description which follows.

### BRIEF DESCRIPTION OF THE DRAWINGS

The disclosure is illustrated by way of example and not limitation in the figures of the accompanying drawings in which like references indicate similar elements.

**FIGURE 1** illustrates an example of a set of storage devices that communicate with a host system through a hardware key, according to one embodiment.

**FIGURE 2** illustrates an exemplary exploded view of a host system that communicates with one or more storage devices of a set of storage devices via a hardware key logically coupled to the host system through a port of the host system, according to one embodiment.

**FIGURE 3A** is a flow chart illustrating a process to set up a password for data encryption and data access of one or more storage devices of a set of storage devices, according to one embodiment.

**FIGURE 3B** is a flow chart illustrating a process to authorize data encryption and data access of one or more storage devices of a set of storage devices, according to one embodiment.

**FIGURE 3C** is a flow chart illustrating a process to identify a lost or stolen portable device, according to one embodiment.

**FIGURE 4A** is an diagram describing an example of the process shown in **FIGURE 3B****.**

**FIGURE 4B** is a diagram further describing an example of the process shown in **FIGURE 3B** **.**

**FIGURE 5** is an exploded view of a hardware key , according to one embodiment.

**FIGURE 6** illustrates a first screenshot , according to one embodiment.

**FIGURE 7** illustrates a second screenshot , according to one embodiment.

**FIGURE 8A** illustrates a third screenshot, according to one embodiment

**FIGURE 8B** illustrates a fourth screenshot, according to one embodiment.

**FIGURE 8C** illustrates a fifth screenshot, according to one embodiment.

**FIGURE 9** illustrates a sixth screenshot, according to one embodiment.

**FIGURE 10** illustrates a block diagram of a machine-readable medium, according to one embodiment.

### DETAILED DESCRIPTION

The following description and drawings are illustrative and are not to be construed as limiting. Numerous specific details are described to provide a thorough understanding of the disclosure. However, in certain instances, well known or conventional details are not described in order to avoid obscuring the description. References to one or an embodiment in the present disclosure can be, but not necessarily are, references to the same embodiment; and, such references mean at least one.

Reference in this specification to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

Embodiments of the present disclosure include systems and methods of data encryption and data access of a set of storage devices via a hardware key.

As processing devices such as personal computers/laptops become increasingly used for storage intensive tasks, such as video and audio editing, the demand for high storage capacity systems has also surged. Thus, in order to achieve fault-tolerance and high performance with high capacity storage systems, RAID configurations can be used on servers and/or personal computers.

A RAID (redundant array of independent disks) configuration combines multiple hard drives into single logical units seen by an operating system. Furthermore, different levels of RAID configurations can provide different levels of data mirroring or striping. The RAID storage configuration can be coupled to the host system using one or more of IDE/ATA, SATA, e-SATA, SCSI, Fibre Channel, iSCSI, high speed SCSI, and/or PCIe interfaces, etc. In addition, a RAID controller can be coupled to the host system and the multiple storage devices of the RAID configuration to present the multiple storage devices as a logic unit to the host system. For example, RAID adaptors can be embedded in the host system (e.g., on the motherboard) or as a separate add on (e.g., expansion cards, USB keys, etc.).

Encryption of data stored or to be stored on one or more storage devices of an array of storage devices via hardware modules provide a secure way to ensure privacy and confidentiality through encryption of data on the array of storage devices (e.g., a RAID array). Existing data on the storage device such as a disk drive can be secured through encryption. The data encryption can be performed by a hardware key that is logically coupled to the array of storage devices and a host system. Access to the encrypted storage device can be obtained via physically connecting the hardware key to the host and the array of storage devices.

For example, the hardware key can include two or more interfaces, one for coupling to the host system and one for coupling to the array of storage devices. In one embodiment, the interface to couple to the host system may utilize a USB interface, a serial interface, a parallel interface, FireWire, etc. The interface to couple to the array of storage devices can be one or more of a IDE/ATA, SATA, e-SATA, SCSI, Fiber Channel, iSCSI, high speed SCSI, and/or PCIe interfaces.

In one embodiment, the encryption key is stored on a hardware device such as a hardware key that is removable from the host system, or is to be accessed elsewhere by the hardware device. The encryption key can be stored in memory, non-volatile memory, flash, or discrete logic of the hardware key. In one embodiment, the hardware key is to interpret the request and issuing a command to one or more storage devices of the set of storage devices to access the encrypted data.

If the hardware key receives a command to read data from the storage device, a password prompt may be generated. The requested data is read from the storage device and deciphered (e.g., decrypted) when the correct password is supplied. Similarly, a password may be requested from the user if a request to erase data on the storage device is received.

For example, the hardware key may store one or more encryption keys in memory. The one or more encryption keys correspond to a storage device, file, or folder that the data residing in is encrypted with. In one embodiment, encryption key management is facilitated by the controller residing on the hardware key.

In one embodiment, the RAID subsystem is to be coupled to the hardware key via a AT Attachment (ATA) interface. When a request to access data on a storage device of the set of storage devices is received by the hardware key, the encryption key is provided by the hardware key to decipher the data to be sent back to the host system that generated the request, according to one embodiment.

In one embodiment, the set of storage devices comprises a Redundant Array of Independent Disks (RAID) subsystem. In one embodiment, the hardware key is to intercept a reply from the storage device, the reply including encrypted data from the storage device; and the hardware key is to use the encryption key to decipher the encrypted data. In one embodiment, the hardware key comprises a USB key. The requested data stored on the storage device can be encrypted with any suitable encryption algorithm. For example, encryption algorithms that can be used include but not limited to: Data Encryption Standard (DES/3DES), Blowfish, International Data Encryption Algorithm (IDEA), Software-optimized Encryption Algorithm (SEAL), RC4, Advanced Encryption Standard (AES), etc.

When a command to secure a storage device is received, a password setup process is initiated, according to one embodiment. The initial setup process enables the user to set up one or more passwords to access (e.g., encrypt, decipher, delete, backup, etc.) data on the storage device. Different access levels (e.g., privilege to read/write/erase) can be set for different users of the system, according to one embodiment. For example, the system administrator may be authorized to encrypt data and to decipher data from the storage device. The system administrator may also possess privilege to initiate re-encryption with a different encryption key. An authorized user may possess privilege to read (or decipher) data from an encrypted drive.

According to one embodiment, access to encrypted data on a secured storage device is obtained via supplying a password that matches a predetermined password. Through supplying the predetermined password, the encryption key used to encrypt data on the secured storage device can be accessed to decipher the encrypted data. In one embodiment, the encryption key or a masked version of the encryption key is stored on one or more of the storage devices on the host system at a predetermined location on the storage device accessible during boot up prior to log on to the operating system.

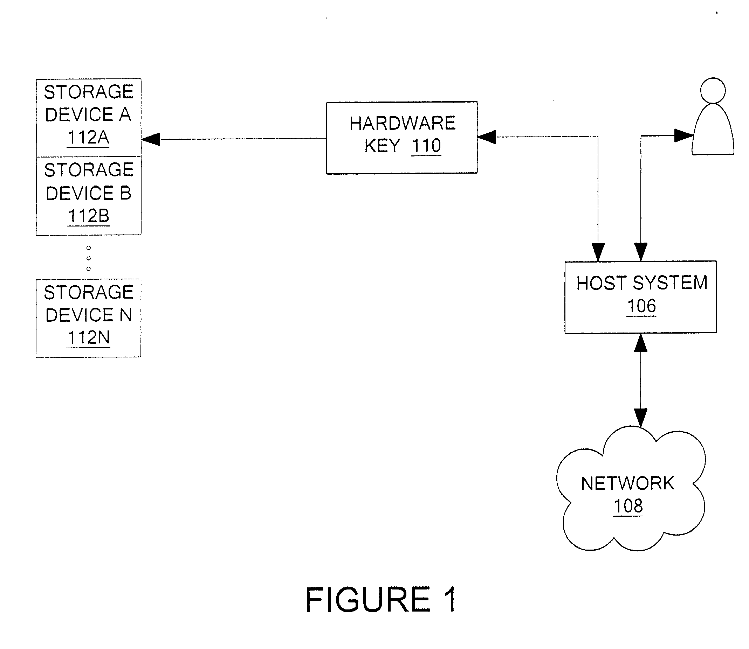

**FIGURE 1** illustrates an example of a set of storage devices 112A-N that communicate with a host system 106 through a hardware key 110, according to one embodiment.

The set of storage devices 112A-N comprise of at least one of a hard disk drive, a hard disk drive with a parallel port (PATA), a hard disk drive with a Serial AT Attachment port (SATA), a SCSI drive, an optical drive, a magnetic drive, an external storage device, semiconductor storage such as a flash device, or a magnetic-optical storage device that is peripheral to the host system 106. The hardware key 110 can be a device that plugs in to a port (e.g., a parallel, a serial, a USB, or a FireWire port) on the system. In one embodiment the hardware key 110 is a memory device that can be plugged and un-plugged from the host system while the host system is running.

For example, the hardware key can be a device supporting plug-and-play (hot swapping). Additionally, the hardware key 110 can be any type of storage and/or memory device able to carry out encryption and decryption processes and store the required software code. In one embodiment, the storage device of the host system cannot be accessed when the hardware key is not connected to the host system. In one embodiment, the hardware key is a USB key that is coupled to the host system via a USB interface. Other types of hardware keys or interfaces can be used.

In one embodiment, the hardware key includes a controller, a storage controller, and a processing unit having an encryption module, an operating system, and/or a hardware driver. In alternate embodiments, the hardware key may include fewer components or additional components.

In one embodiment, the hardware key serves as a pass-through to another device. The hardware key can be physically disconnected from the host system when a user wishes to log off and secure the system. Access may not be re-obtained unless the hardware key is coupled to the host system. Therefore, the encryption key residing on the hardware key is not stored on the system itself. In one embodiment, the encryption key on the hardware key is accessible when the predetermined password is supplied and the hardware key having stored on it the encryption key is coupled to the host system and the storage device to be read.

In one embodiment, the hardware key is to intercept a request sent from a host to one or more storage devices of a set (array) of storage devices to access data stored on the storage device. The data stored on the storage device has been encrypted using at least one encryption key and the hardware key is configured to be plugged into a port of the host. In one embodiment, the hardware key further comprises a unit to use the encryption key to decipher the encrypted data from the storage device, and to control data access to the set of storage devices. For example, the unit to control data access to the set of storage devices can include a unit to control the RAID subsystem.

The hardware key can store one or more encryption keys used to secure storage devices. In one embodiment, the one or more storage devices of the set of storage devices have been secured with the one or more encryption keys and the encryption keys stored are accessible by the host system upon established connectivity. For example, the controller manages the encryption keys and storage devices secured with the encryption keys. In one embodiment, the encryption keys are matched to the respective storage devices encrypted with the encryption key in a look up table in the controller or memory. Other management techniques can be used.

The encryption module can include memory to store one or more encryption keys used to secure any number of storage devices. In one embodiment, the encryption module does not store the encryption keys. Rather, the encryption key(s) are sent to the hardware key 110 from another device for data decryption. In one embodiment, the hardware key 110 is coupled to the set of storage devices 112A-N through the host system 106.

In one embodiment, the encryption key is stored in a masked form on the hardware key such that confidentiality of the encryption key is not compromised if the hardware key is lost. In addition, the encryption key is transferred from device to device in masked (e.g., encrypted, masked, private/public key rolling exchange, etc.) form to prevent confidentiality of the encryption key from being compromised in case the transfer is intercepted.

The encryption key can be masked (disguised) in one of many forms. For example, the encryption key, when stored on the hardware key, can be encrypted with a private key determined by a user set password. Thus, the encryption key is un-masked upon validation of a request such as a user providing a correct password. The correct password may provide access to the private key or is the private key itself used to mask the encryption key.

In addition, the encryption key can be hashed based on a predetermined algorithm. The predetermined algorithm can be an operation (e.g., Boolean, arithmetic, etc.) of the encryption key with a predetermined password. Thus, to access an un-hashed version of the encryption key, the predetermined password is to be supplied by the user. In one embodiment, the predetermined password enables the predetermined algorithm to be performed on the encryption key to access the un-hashed version.

In one embodiment, each file on the host system has a different encryption key. In some embodiments, each folder has a different encryption key. In another embodiment, all data residing on the storage device is encrypted with one encryption key. A combination of file specific encryption keys, folder specific encryption keys, and/or partition specific encryption keys can be implemented on the storage device or on multiple storage devices of a host system. Allocation of encryption keys to files, folders, partitions, and/or storage devices can be automatic or user specified.

In addition, the encryption key used for data encryption may be changed upon user request or upon an automatic trigger. Before applying a different encryption key, the encrypted data may be decrypted with the original key before encrypting the same data again with the different encryption key. For example, the automatic trigger may be event based such as several failed logon attempts followed by a successful attempt. The automatic trigger may also be time based, such as when an encryption key has been used for a predetermined amount of time.

In one embodiment, the hardware key 110 is a USB key able to be plugged into a USB port on the host system. For example, the USB key may be a flash drive that is removable and rewriteable. The controller in the hardware key 110 is a USB controller, according to one embodiment.

In one embodiment, the storage controller (hard disk controller) on the hardware key is a RAID controller to manage a RAID array coupled to the hardware key 110. In general, the storage controller can be IDE (PATA), Serial ATA, external-SATA, SCSI, and/or iSCSI interface adaptors. The hardware key 110 can include any number of storage controllers with any combination of the adaptors listed above.

The host system 106 can be any type of system that supports a storage device 102 and an array of storage devices 112A-N having various logical configurations. For example, the host system can include but is not limited to, a desktop computer, a mobile computing device such as a notebook, a laptop computer, a handheld computer, a mobile phone, a smart phone, a PDA, etc. In one embodiment, the host system 106 can be coupled to a network 108. In one embodiment, the array of storage devices 112A-N may be connected. In other embodiments, the encrypted data may be redirected through a chipset, using a driver embedded in the operating system of the host system and redirected to an internal storage device , with or without utilization of the interceptor 104.

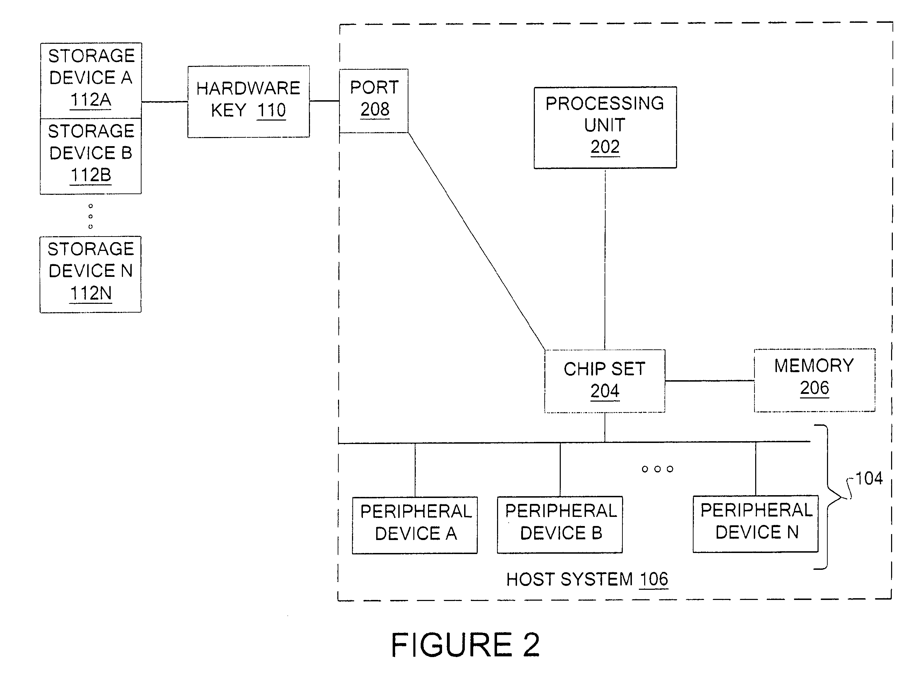

**FIGURE 2** illustrates an exemplary exploded view of a host system 106 that communicates with a set of storage devices 112A-N via a hardware key 110 logically connected to the host system 106 through a port 208 of the host system 106, according to one embodiment.

In one embodiment, the host system 106 includes a processing unit 202, a chip set 204, memory 206, a port 208 and an array of I/O devices, which may include a keyboard, a pointing device, a sound system, and/or a video system, etc. The port 208 can be at least one of a serial port (e.g., RS-232), a parallel port, an Ethernet port, FireWire, and/or a USB port. In addition, the port 208 may be a virtual port such as a virtual serial port which is an emulation of the physical serial port.

The host system 106 illustrated is an exemplary overview thus there may be many variations and modifications of this system without departing from the spirit of the current disclosure. For example, the memory could be located on what is known in the art as the "north" bridge; the video could have its own separate north bridge access, and the I/O could be connected through the "south" bridge.

In one embodiment, the port 208 are coupled to the host system 106 via the chipset 204. The set of storage devices 112A-N can also comprise hard disk drives that communicate with the hardware key through different interfaces. The hardware key 110 can have any number of storage controllers suited to communicate with different storage devices such as serial ATA (SATA), parallel ATA (PATA) interface, FireWire, SCSI, or USB. In one embodiment, the set of storage devices 112A-N is configured as a RAID array and communicates with the host system via the hardware key 110 having a RAID controller.

The hardware key 110 interface with the set of storage devices 112 A-N support different data transfer rates depending on the specification of different storage devices. For example the SATA interface supports a data rate of 1.5, 3, and 6 Gbits/s. The Fire Wire 800 and Fire Wire 400 buses also have different data transfer rates.

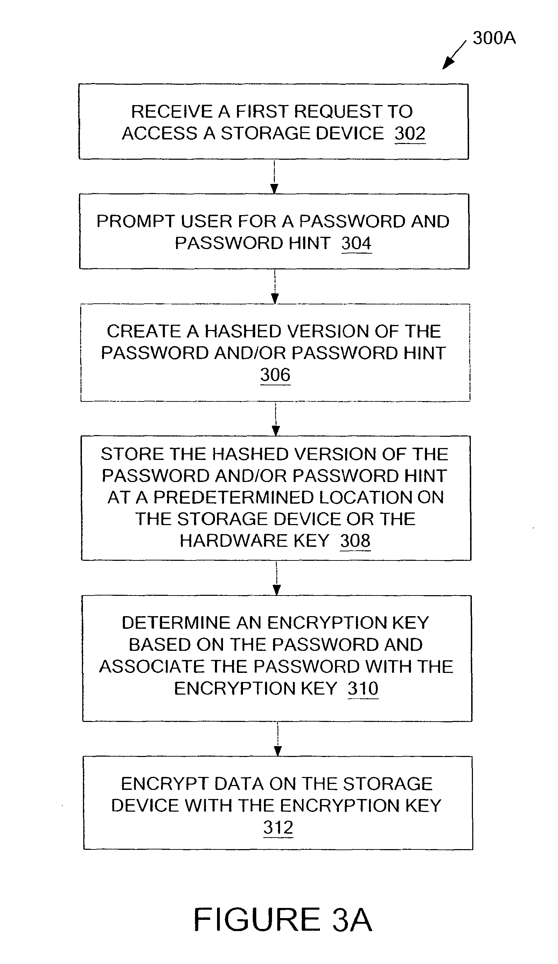

**FIGURE 3A** is a flow chart 300A illustrating a process to set up a password for data encryption and data access of one or more storage devices of a set of storage devices, according to one embodiment.

In process 302, a first request to access a storage device is received. For example, when a user attempts to log on to a newly purchased laptop (e.g., host system), the user generates a first request to access the storage device of the newly purchased laptop. In addition, when a user attempts to use the one or more storage devices of the set of storage devices, the first request to access the storage device is generated by the user.

In one embodiment, a first request to access the used storage device is also generated when the user attempts to secure existing data on the one or more storage devices of the set of storage devices. The request can be detected based on software installed on the host system or on a hardware key coupled to the host system.

The request can also be generated by a user to run a second operating system installed on a secondary partition of the storage device. Attempts to access specific files or folders can also trigger a request for access to encrypted data stored on a storage device. In addition, a request may be automatically or manually generated when the system or operating system exits sleep mode, power save mode, or time out. In general, the request will be automatically generated during system boot up or system restart.

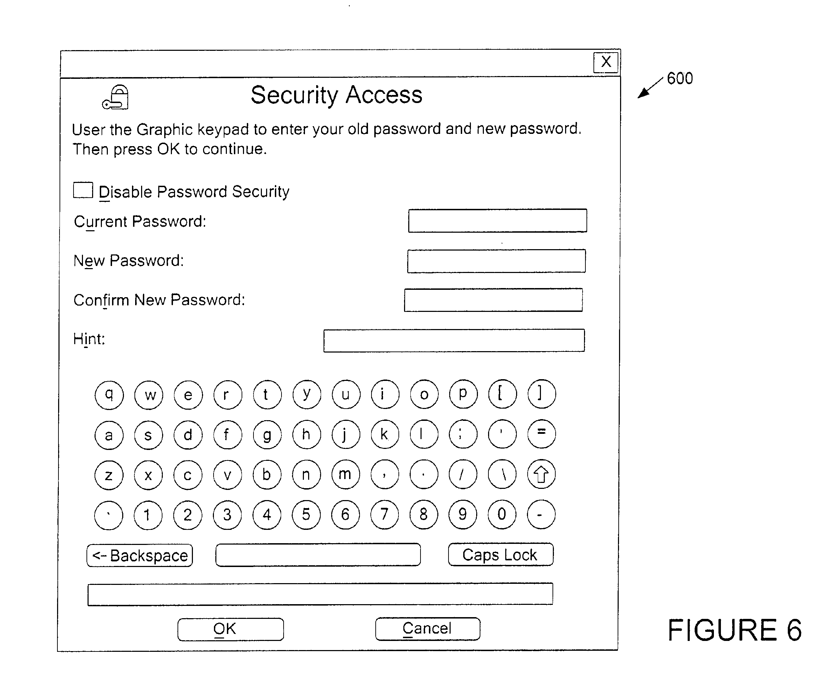

In process 304, the user is prompted to set up one or more passwords and a password hint as shown in the example screenshot of **FIGURE 6****.** The hardware key (e.g., USB key) may be coupled (e.g., plugged into the USB port) to the host system during password set up since in one embodiment, the encryption key is stored on the hardware key. In one embodiment, the one or more passwords are used to generate one or more encryption keys to encrypt data on the one or more storage devices of the set of storage devices of a host system.

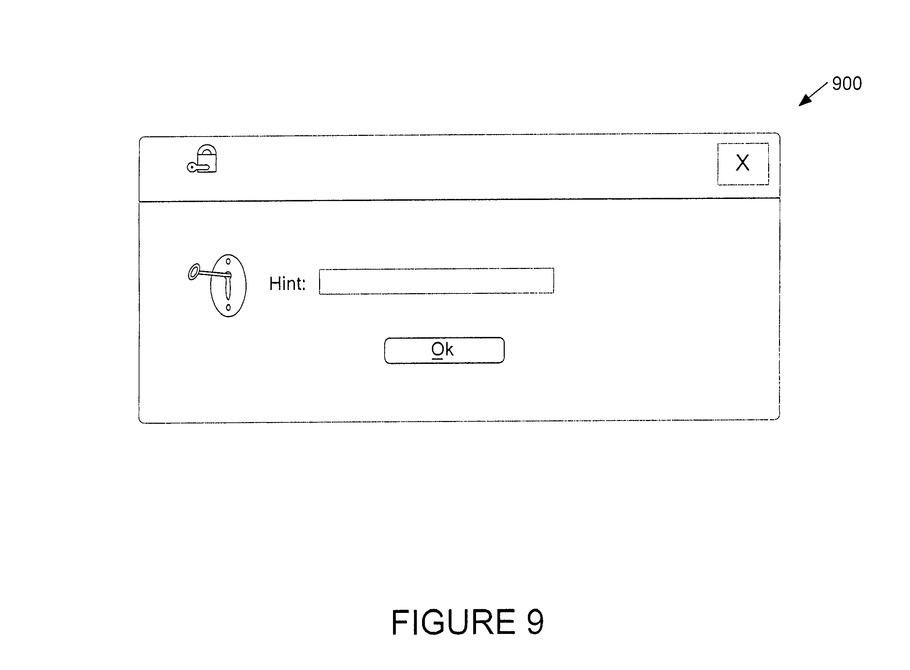

In one embodiment, the encryption key is predetermined and associated with the one or more passwords once set up by the user in response to the request. In addition, the predetermined encryption key may be further masked (e.g., encrypted, or hashed) based on the one or more passwords set by the user. According to one embodiment, the password hint is supplied to the user upon failed logon attempts with wrong passwords as shown in the example screenshot of **FIGURE 9****.**

Once the initial setup process has been completed and the predetermined password has been supplied, new data to be written to a storage device can be encrypted prior to storage on the storage device, according to one embodiment. In addition, if the user wishes to encrypt a used disk drive, the data already stored on the disk drive may be moved to a second storage location (e.g., another storage location on the same disk drive, another storage device, system memory, memory device, etc.) to be encrypted and then migrated back to the original storage location.

In process 306, a hashed version of the password and the password hint is created. The hashed (or masked otherwise) version of the password and the password hint can be created to protect the password and the password hint. For example, if data is directly read from the storage device or the hardware key, the password will appear in a disguised form. Various hashing algorithms can be used. According to one embodiment, an encryption algorithm can be used to mask the password.

In process 308, the hashed (or disguised via any algorithm) version of the password and/or password hint are stored at a predetermined location of the one or more storage devices of the set of storage devices or the hardware key. In accordance with one embodiment, hashed version of the passwords and/or hints are stored on sectors of the storage device or the hardware key that are inaccessible to the operating system of the host. Thus, access of encrypted data cannot be by-passed by the operating system without first supplying the correct password(s). In one embodiment, the hashed version of the password and/or password hint is stored on another storage device in the same host system. For example, the passwords to slave devices may be stored on the master device.

In process 310, an encryption key to encrypt data stored on the one or more storage devices of the set of storage devices is determined based on the password and the encryption key is associated with the password for future access. In one embodiment, the encryption key is generated from the password and stored on the hardware key. In one embodiment, the encryption key is predetermined and can be further disguised (e.g., hashed or encrypted) based on an operation with the password thus creating an additional layer of security. In one embodiment, the password is a private key for encrypting the encryption key. Therefore, if the password is compromised, since the specific algorithm is unknown to a hacker, the encryption key remains protected.

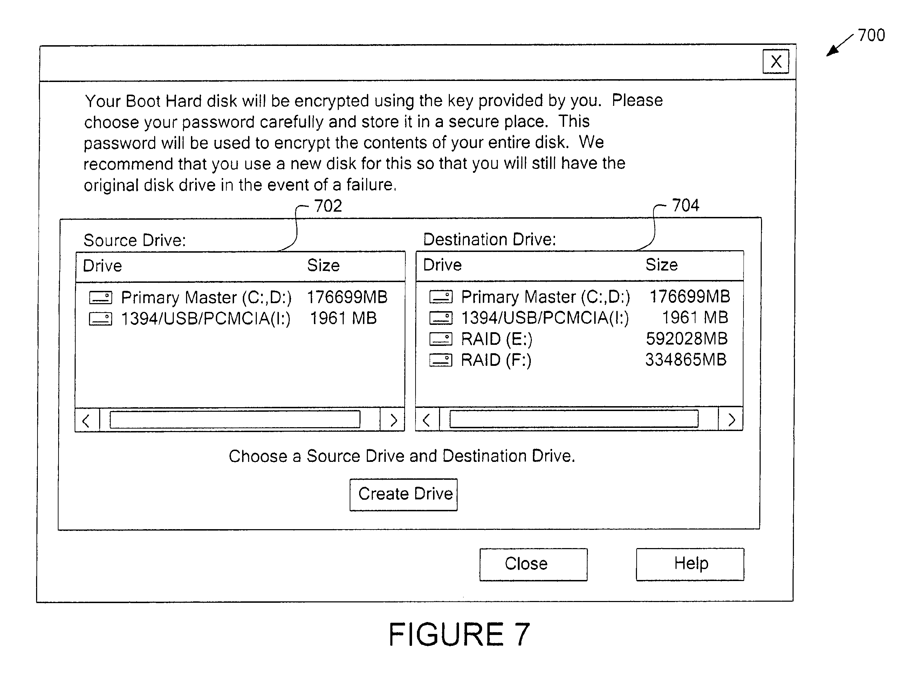

In operation 312, the data on the one or more storage devices of the set of storage devices is encrypted with the encryption key. For example, as shown in an example screenshot of **FIGURE 7****,** a source drive to be secured can be selected under the list of 'Source Drive:" shown in window 702. In one embodiment, a 'Destination Drive' (e.g., from the 'Destination Drive' window 704 of **FIGURE 7**) may be chosen to which to migrate the data from the 'Source Drive'. The data can be migrated from the source drive and encrypted at the destination drive. The encrypted data can be migrated back to the source drive or stored on the destination drive. Both the source and destination drives can belong to the same array of storage devices (e.g., in a RAID configuration). In one embodiment, the source and destination drives can be storage devices that are presented to the host system as separate logic units.

In one embodiment, a destination drive does not need to be chosen. For example, the data to be encrypted on the source drive is migrated to a second storage location (e.g., a different partition) on the same drive to be encrypted. Similarly, the encrypted data is either migrated back to the original storage location or stored at the second storage location on the source drive. In one embodiment, if the host system generates a request to write data to the one or more storage devices of the set of storage devices, the data is encrypted with the encryption key prior to migration to the storage device. In addition, the data may be written to the storage device prior to encryption and then encrypted at a later time based on automatic triggers or manual triggers. For example, data written in a predetermined time interval is encrypted. Similarly, a predetermined amount of data written (e.g., 5KB) can be encrypted at the same time.

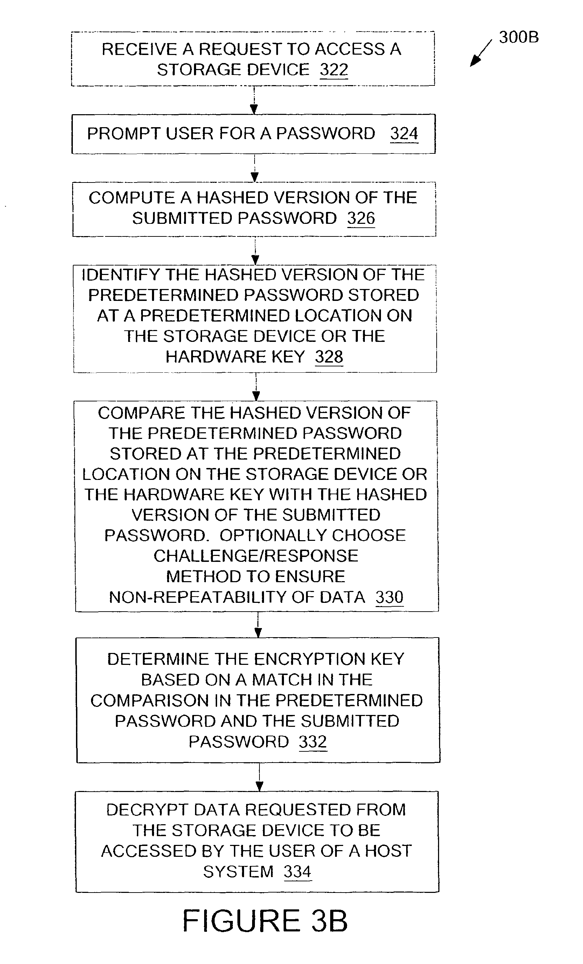

**FIGURE 3B** is a flow chart 300B illustrating a process to authorize data encryption and data access of a storage device of a set of storage devices, according to one embodiment.

In process 322, a request to access a storage device or a storage device of the set of storage devices is received. For example, the request can be received upon initiation of a session. The session may be initiated in response to at least one of a power-up, completion of a time-out, or a restart of a system. The session may also be triggered after existing sleep mode or power save mode while the hardware key is plugged into a port on the host system. A request to access a storage device can also be initiated by plugging a corresponding hardware key into a port on the host system.

In one embodiment, the request is generated when particular partitions, folders, or files of the storage device are accessed. Furthermore, a request can also be generated when a different operating system residing on a different partition of the storage device is accessed.

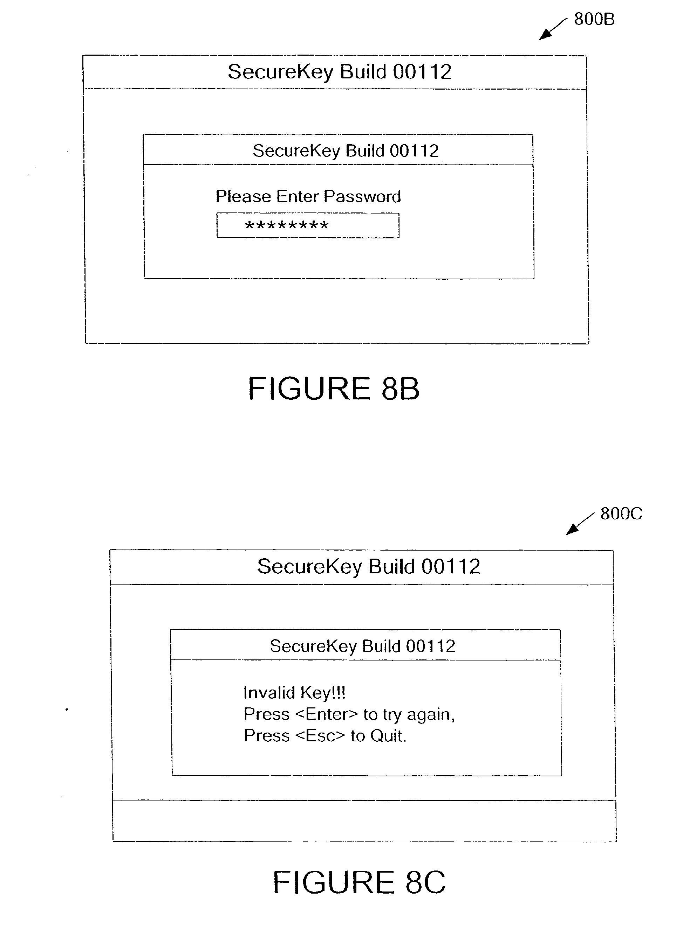

In process 324, the user is prompted for a password, as shown in the example screenshot of **FIGURE 8B**. The password is used to authorize access to data on the storage device. For example, the password can be a private key used to decrypt the one or more encryption keys stored on the hardware key. In addition, as discussed previously, the password can be used to un-mask (e.g., un-hash) or perform other operations to decipher the encryption key. Multiple passwords may be used for different files, folders, operating systems, or partitions on one storage device, according to one embodiment.

In process 326, a hashed version of a user submitted password is computed based on a predetermined algorithm. According to one embodiment, an encryption algorithm can be used. In process 328, the hashed version of the predetermined password stored at a predetermined location on the one or more storage devices of the set of storage devices or the hardware key is identified. In process 330, the hashed version, or otherwise disguised version of the predetermined password is compared with the hashed version, or otherwise disguised version of the user submitted password. If a match is determined, access to the encryption key is enabled, in process 332. In process 334, the data requested from the storage device to be accessed by the user of the host system is decrypted.

In one embodiment, a predetermined password is supplied by the user before the encryption key on the hardware key can be accessed to decrypt secured data. For example, when the hardware key receives a request to read data from the storage device, a request for a password is generated on the host system to the user. When a password matching the predetermined password is received, the encryption key on the hardware key can be accessed. In one embodiment, the accessing the encryption key comprises accessing a second encryption key to decipher the encryption key. For example, the correct password, when received from the user can be used to decrypt the encryption key itself. Thus, the encryption key is stored in disguised form on the hardware key providing additional security.

In one embodiment, the method includes prompting a user to provide a password in response to receiving the request and accessing the encryption key to decipher the requested data stored on the storage device in response to receiving a password matching a predetermined password. For example, when a host system exits sleep mode, the user can be prompted to supply a correct password before further using the host system.

The user supplied password is compared to a predetermined password that is accessible prior to system logon. In one embodiment, the predetermined password is stored at a predetermined location on the storage device to be accessed. For example, the predetermined password can be stored in the master boot record of a bootable storage device. In one embodiment, the predetermined password for one storage device may be stored on another storage device. For example, in a system with multiple storage devices, the predetermined passwords for the slave storage devices may be stored on a master storage device.

The correct password allows access to one or several encryption keys used to encrypt data on the storage device, according to one embodiment. Alternatively, a password facilitates system boot up into the operating system while additional passwords enable access to different partitions, files, or folders once the user is logged in to the system. In one embodiment, a correct password is associated with the encryption key to decipher the requested data.

Alternatively, the correct password is associated with a masked version (e.g., a hashed version) of the encryption key and the correct password may be used to un-mask the masked version of the encryption key. In one embodiment, the correct password is used to identify an additional key for unmasking the masked version of the encryption key. For example, accessing the encryption key comprises accessing a second encryption key to decipher the encryption key.

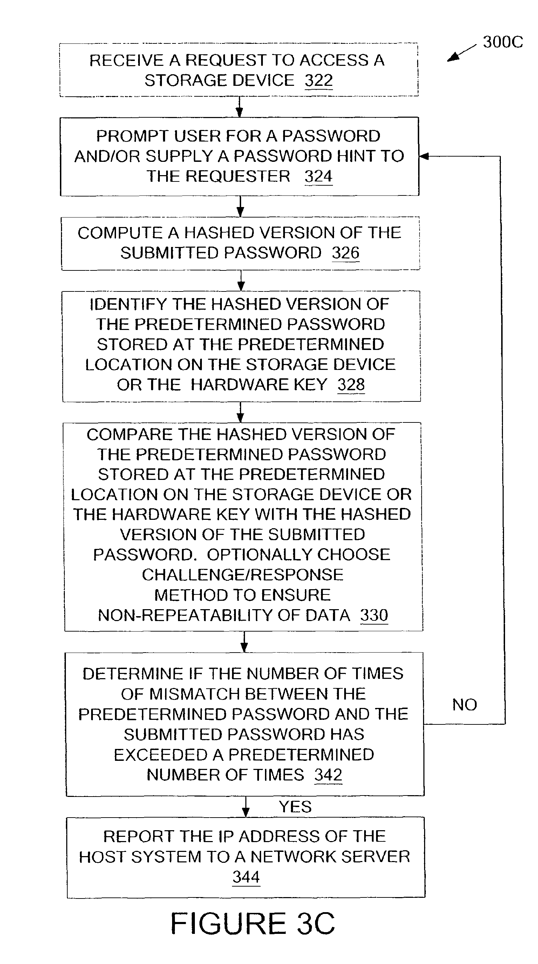

**FIGURE 3C** is a flow chart 300C illustrating a process to identify a lost or stolen portable device, according to one embodiment.

In process 330, the hashed version of the predetermined password is compared with the hashed version (or otherwise disguised version)of the user submitted password. A challenge/response method is optionally chosen to ensure non-repeatability of data. If a mismatch is identified, the number of time of mismatch that has occurred between the predetermined password and the submitted password is determined. If the number of times has not exceeded a predetermined threshold, the user is prompted again for a password and/or a password hint, in operation 342. For example, as shown in the example screenshot 800C of **FIGURE 8C**, an invalid key has been entered and the user has the option to retry or to quit.

If the number of times has exceeded the predetermined threshold, an IP address of the host system is reported to a network server if the system is connected to a network, in process 344. In one embodiment, a unique identifier of the host system such as a MAC address, a user name, a workgroup name, may be also broadcasted and associated with the IP address. The host system identifier and IP addresses can be published on a web site for individuals that have lost their electronic devices to see if any attempt has been made to access their devices. If so, the published IP address may clue them in as to the whereabouts of their lost devices.

In one embodiment, if the host system is not connected to a network at the time of the failed log on attempts, an indicator of the failed attempts can be saved and broadcasted the next time the system is connected to a network. In addition to reporting an IP address to a website, a notification can be sent to an email address as specified by the user in case of failed log on attempts. The email can report information such as the number of failed log on attempts, the passwords used to attempt log on, status of the system, IP address of the system if currently available, etc. In one embodiment, email notifications can be sent when any request to access fails. For example, if a failed attempt to access a particular file, or folder occurs, an email can be sent to an email address specified by the user.

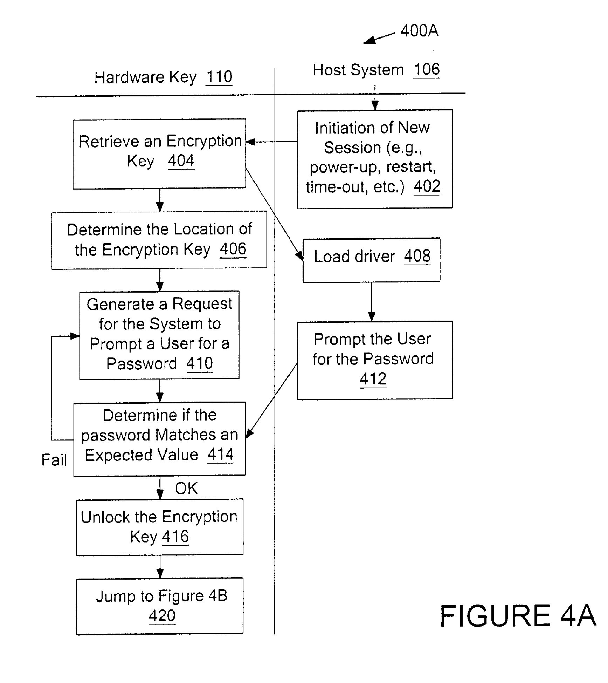

**FIGURE 4A** is an interaction diagram describing an example of the process shown in **FIGURE 3B** illustrating interactions between one or more storage devices of a set of storage devices, a hardware key, and a host system for password authorization for data access of the set of storage devices, according to one embodiment.

In process 402, a user initiates first access of a session and the host system sends a request to hardware key. The hardware key identifies the request as the first request of this session. A session may be required to begin after a power-up, a time-out, restart, or some other trigger for terminating a previous session, or when the hardware key is initially plugged into the host system, according to one embodiment. In process 404, the hardware key retrieves an encrypted version of the key from a predetermined location on the hardware key itself. In process 406, the location of the key is determined.

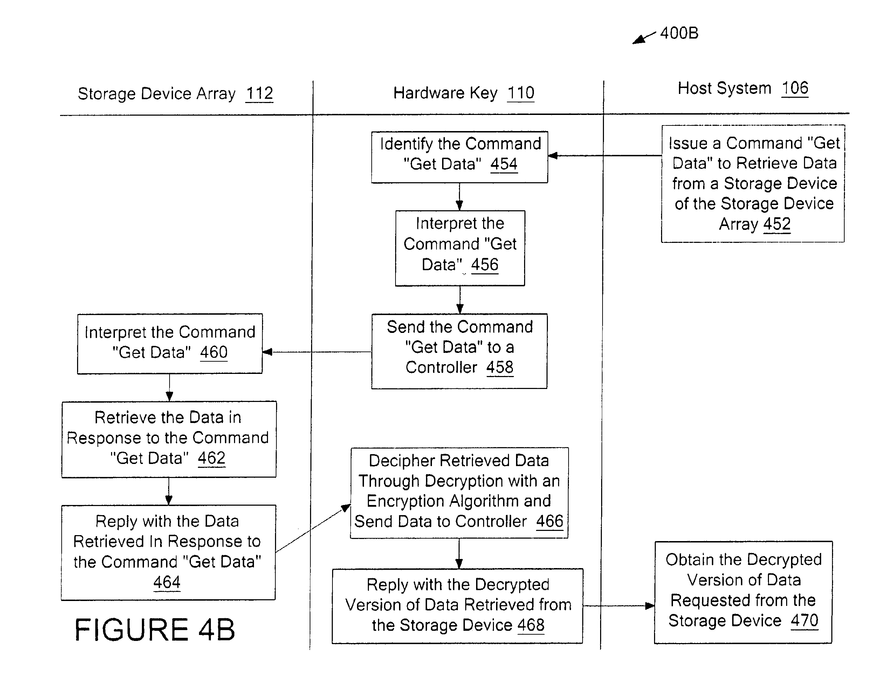

In process 408, a driver load is initiated on the host system, using, for example, USB plug-and-play features. In process 410, the hardware key generates a request for the host system to prompt the user for a password. In process 412, the user is prompted for the password. After the user enters the password, in process 414, the system determines whether or not the password matches an expected value. The encryption key retrieved in process 406 may also be encrypted using an encryption algorithm (e.g., DES/3DES, BlowFish, AES or other suitable encryption methods) or other methods to disguise the encryption key. If the password matches, encryption key is unlocked, which then is used to decipher or encrypt the data, using an encryption algorithm such as AES or other, suitable protocols. In process 420, the process jumps to the process of Figure 4B.

In one embodiment, if the password does not match, the process loops back to process 410, prompting the user for the password again. After a predetermined number of failed attempts to match the password, the host system may terminate the session (e.g., by a time-out or a system reboot). In one embodiment, a hint or hint question is offered to the user to help with remembering the password or to allow an unlock override. In one embodiment, a master encryption key is available and is accessed with a master password to access an encrypted drive.

**FIGURE 4B** is an interaction diagram further describing an example of the process shown in **FIGURE 3B** illustrating interactions between one or more storage devices of the set of storage devices, a hardware key, and a host system for data access to the set of storage devices, according to one embodiment.

In process 452, the host system issues a command "Get Data". In process 454, the "Get Data" command is received by the hardware key. In process 456, the command "Get Data" is interpreted by the hardware key. In process 458, the command "Get Data" is sent to the storage controller on the hardware key (e.g., disk drive controller, RAID controller, etc.).

In process 460, the storage device array receives and interprets the command. In process 462, the requested data is retrieved in response to the command "Get Data". In process 464, one or more storage devices of the storage device array sends a reply having the requested data back to the host. In process 466, the retrieved data is deciphered through decryption with a suitable algorithm (e.g., encryption algorithm such as DES/3DES, Blowfish, AES, etc.) and the retrieved data is sent to the storage controller. The retrieved data can be sent to the storage controller before or after decryption by the hardware key. Depending on the algorithm used, an encryption key may be used to decipher the retrieved data.

In some cases, the encryption key may be transmitted from the host computer by sending simulated commands (not shown) that include parameters un-interpretable by a hard disk drive, but are intercepted by the hardware key and interpreted accordingly, as, for example, a command for reception of the key. In one embodiment, the encryption key is transmitted in encrypted form.

In process 468, the decrypted version of the requested data retrieved from the storage device is sent to the host system. In process 470, the decrypted version of the requested data from the one or more storage devices of the set of storage devices is obtained. In one embodiment, an auto back up software can make backups of data on the one or more storage devices of the set of storage devices through an encryption function (e.g., AES) function.

For example, the un-encrypted data at a storage location of the storage device can be temporarily migrated to a second storage location to be encrypted and then migrated back to the original storage location. In one embodiment, the second storage location is a different storage location on the same storage device. In one embodiment, the second storage location is a different storage device of the same storage array or a different storage array. In one embodiment, the original (e.g., non-encrypted) data can be removed with multiple random overwrites to erase the unencrypted data such that data on the storage device is encrypted.

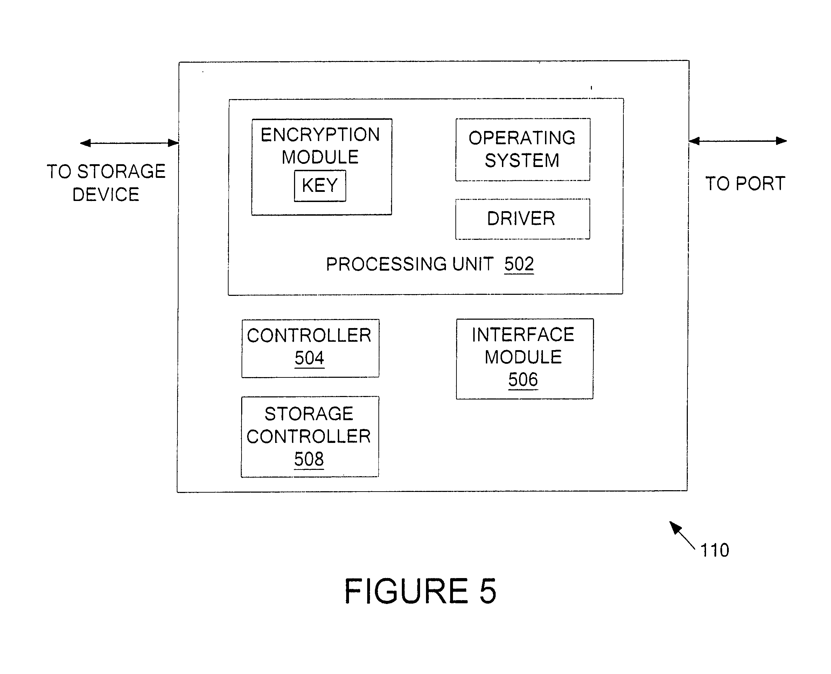

**FIGURE 5** is an exploded view of a hardware key 110 having a processing unit 502 , a controller 504, and a storage controller 508, according to one embodiment.

In one embodiment, the hardware key is a USB adaptor and the controller 504 is a USB controller. The processing unit 502 may include various software instances such as the encryption module, the operating system, and/or the storage device driver. The storage controller 508 can be a hard disk controller such as IDE, Serial ATA, e-SATA, SCSI controllers.

For example, the storage controller enables the hardware key 110 to be logically coupled to an external array of storage devices. In one embodiment, the external array of storage devices is in a RAID configuration. The storage devices can be coupled to the hardware key 110 via one or more of an IDE, SATA, e-SATA, and SCSI interfaces. In one embodiment, the hardware key 110 includes any number of storage controllers having a combination of different interfaces and is able to be logically coupled to multiple storage devices with different interfaces.

In one embodiment, the external array of storage devices are powered by an external power supply. The external array of storage devices may be ultra-low power devices and thus can draw power through the hardware key's connection to the host system.

The encryption module includes code to execute one or more encryption algorithms to secure and decipher data stored on the one or more storage devices of the set of storage devices. In one embodiment, different encryption algorithms can be used for different storage devices and the controller is able to associate the relevant encryption algorithm with the one or more storage devices of the set of storage devices that was encrypted with the encryption algorithm.

In one embodiment, the hardware key 110 comprises memory (e.g., non-volatile, flash, or discrete logic, etc.) to store one or more encryption keys used with the one or more encryption algorithms to secure one or more storage devices. Alternatively, the encryption key is supplied by an alternative device to the hardware key 110 during encryption/decryption processes of the hardware key 110. For example, the one or more encryption keys can be sent to the hardware key 110 upon authorization. The authorization can take upon one of many forms for example, a password authorization identifying a user identity of the host system, according to one embodiment.

**FIGURE 6** illustrates a screen shot 600 showing an interface to create a password or to change the password, according to one embodiment.

The screenshot 600 shows a security access screen to be used for password maintenance. In one embodiment, the security access screen includes a checkbox 'Disable Password Security' to disable password authentication prior to access of a storage device to logon to the operating system or to access data on the storage device. For example, if the 'Disable Password Security' box is selected, the password fields and the hint field do not need to be filled in prior to logon or prior to setting up the host system. In this case, data stored on the storage device may not be encrypted. Or, data stored on the storage device may be encrypted but the encryption key is available for decryption without a password having to be supplied prior to data access.

In one embodiment, a new password is set up to secure the storage device by entering a desired password in the 'New Password' and 'Confirm New Password' fields. The 'Current Password' field may be left blank in this case. In one embodiment, an existing password is changed via supplying the correct password in the 'Current Password' field and entering the desired password in the 'New Password' and 'Confirm New Password' fields.

The 'Hint' field can be used to enter a question to which only the user knows the answer to. The question may be asked when the user forgets the password, for example, when an incorrect password is entered after a predetermined number of times. The 'Hint' field can also be used to enter a password hint, such as 'the password is related to Aunt Dolly's birthday' to remind the user of the password. In one embodiment, the user may indicate that he or she has forgotten the password and request to see the password hint prior to submitting incorrect passwords for the predetermined number of times.

**FIGURE 7** illustrates a screenshot 700 showing an interface to secure a storage device, according to one embodiment.

The screenshot 700 illustrates an example of securing a storage device through data encryption of data on the storage device. In one embodiment, a source drive (e.g., the storage to be secured via data encryption) is selected from the list of storage devices listed under subwindow 702 and a destination drive is selected from the list of storage devices listed under subwindow 704. For example, the source drive is the storage device having data to be secured. The data on the source drive can be encrypted and then migrated to the destination drive to be stored. In one embodiment, the data on the source drive can be migrated to the destination drive to be encrypted and erased from the source drive. Then the encrypted data can be migrated back to the source drive to be stored.

In one embodiment, one storage device (e.g., the source drive) is involved in the process. For example, the data to be encrypted on the source drive is migrated to another storage location to be encrypted. The un-secured data is erased on the original storage location and the encrypted data stored on the other storage location can be migrated back to the original storage location to be stored, according to one embodiment.

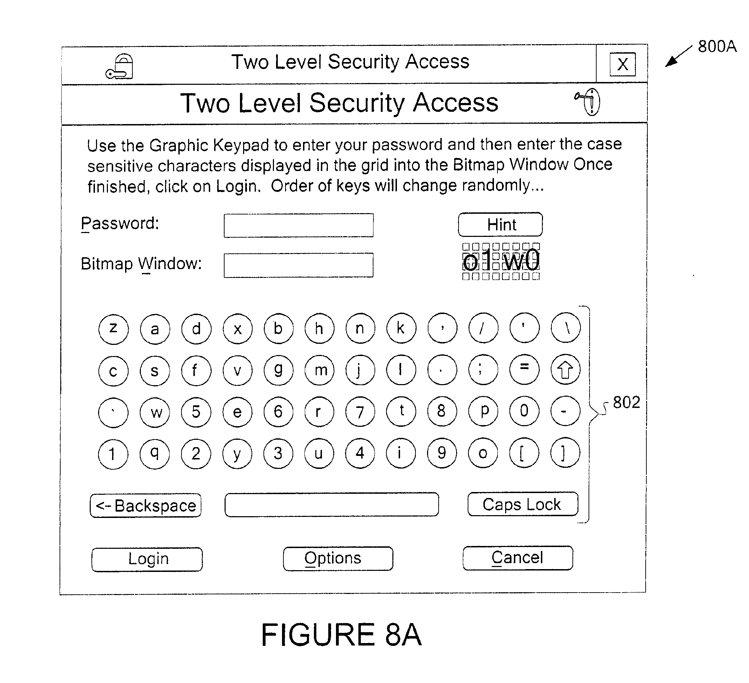

**FIGURE 8A** illustrates a screenshot 800 showing an interface showing a login screen to access a secured storage device, according to one embodiment

The screenshot 800 shows an example of a two level security access for authentication to access data on a storage device. In one embodiment, the predetermined password is to be entered in the 'Password' field before access to the storage device can be granted. In one embodiment, the text shown in the bitmap window is to be entered in addition to the correct password in the 'Bitmap Window' field before access to the storage device is granted. Once the 'Password' field has been filled in, the 'Login' icon can be clicked to verify access and upon successful verification, grant access.

**FIGURE 8B** illustrates a screenshot 800B showing an interface showing a login screen having a password prompt, according to one embodiment.

The predetermined password is to be entered in the field 'Please Enter Password' to access the system (e.g., to log on to the one or more operating systems and/or to access one or more storage devices), according to one embodiment.

**FIGURE 8C** illustrates a screenshot 800E of a unsuccessful logon due to an invalid password entered in **FIGURE 8B****,** according to one embodiment.

Upon the unsuccessful logon, the user has the option to quit or to try again, according to one embodiment. There may be a predetermined number of times the user can submit invalid passwords. When the predetermined number of times has been reached, the system may quit or offer the user a password hint as shown in the embodiment of **FIGURE 9****.**

**FIGURE 9** illustrates a screenshot showing an interface showing a screen to display a password hint, according to one embodiment.

The screenshot 900 shows an example of a prompt to show a password hint to the user. The password hint prompt can be requested by the user if the user has forgotten the password. In one embodiment, the password hint prompt is triggered when a predetermined number of times of incorrect password submissions have occurred. For example, if a user submits three instances of incorrect passwords, the system can supply the password hint specified during password setup.

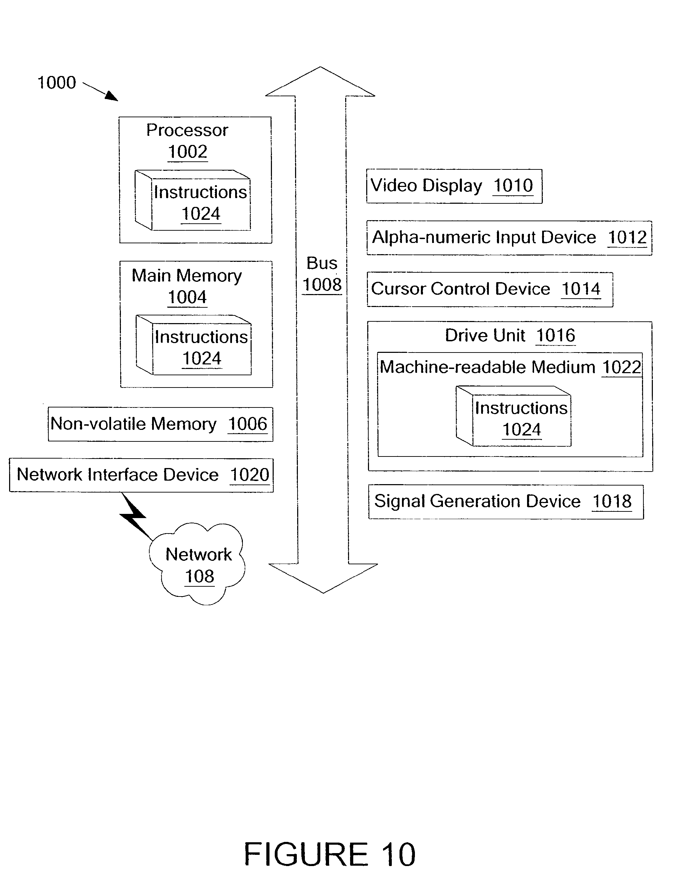

**FIGURE 10** shows a diagrammatic representation of a machine in the exemplary form of a computer system 1000 within which a set of instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in a client-server network environment, or as a peer machine in a peer-to-peer (or distributed) network environment. The machine may be a server computer, a client computer, a personal computer (PC), a tablet PC, a set-top box (STB), a personal digital assistant (PDA), a cellular telephone, a web appliance, a network router, switch or bridge, or any machine capable of executing a set of instructions (sequential or otherwise) that specify actions to be taken by that machine.

While the machine-readable medium 1022 is shown in an exemplary embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present invention. In general, the routines executed to implement the embodiments of the disclosure, may be implemented as part of an operating system or a specific application, component, program, object, module or sequence of instructions referred to as "computer programs." The computer programs typically comprise one or more instructions set at various times in various memory and storage devices in a computer, and that, when read and executed by one or more processors in a computer, cause the computer to perform operations to execute elements involving the various aspects of the disclosure.

Moreover, while embodiments have been described in the context of fully functioning computers and computer systems, those skilled in the art will appreciate that the various embodiments are capable of being distributed as a program product in a variety of forms, and that the disclosure applies equally regardless of the particular type of machine or computer-readable media used to actually effect the distribution. Examples of computer-readable media include but are not limited to recordable type media such as volatile and non-volatile memory devices, floppy and other removable disks, hard disk drives, optical disks (e.g., Compact Disk Read-Only Memory (CD ROMS), Digital Versatile Disks, (DVDs), etc.), among others, and transmission type media such as digital and analog communication links.

Although embodiments have been described with reference to specific exemplary embodiments, it will be evident that the various modification and changes can be made to these embodiments. Accordingly, the specification and drawings are to be regarded in an illustrative sense rather than in a restrictive sense. The foregoing specification provides a description with reference to specific exemplary embodiments. It will be evident that various modifications may be made thereto without departing from the broader spirit and scope as set forth in the following claims. The specification and drawings are, accordingly, to be regarded in an illustrative sense rather than a restrictive sense.

## Claims

1. A method, comprising:
a hardware key intercepting a request sent from a host to a storage device to access data stored on one of a set of storage devices, wherein the data stored on the storage device has been encrypted, the hardware key configured to be plugged into a port of the host and comprising a unit to control data access to the set of storage devices;
the hardware key interpreting the request and issuing a command to the one of the set of storage devices, to access the encrypted data; and
the hardware key providing the encryption key to decipher the encrypted data from the one of the set of storage devices.

2. The method of claim 1, wherein the set of storage devices comprises a Redundant Array of Independent Disks (RAID) subsystem.

3. The method of claim 2, wherein the unit to control data access to the set of storage devices comprises a unit to control the RAID subsystem.

4. The method of claim 3, wherein the unit to control the RAID subsystem, comprises one of a controller and a software instance.

5. The method of claim 3, wherein the RAID subsystem is to be coupled to the hardware key via an AT Attachment (ATA) interface.

6. The method of claim 5, further comprising:
the hardware key intercepting a reply from the storage device, the reply including encrypted data from the storage device; and
the hardware key using the encryption key to decipher the encrypted data.

7. The method of claim 6, wherein the hardware key comprises a USB key.

8. The method of claim 6, wherein accessing the encryption key comprises accessing a separate encryption key to decipher the encryption key used to decipher the encrypted data.

9. A hardware key comprising:
a unit to intercept a request sent from a host to a storage device to access data stored on one of a set of storage devices, wherein the data stored on the storage device has been encrypted, the hardware key configured to be plugged into a port of the host and comprising a unit to control data access to the set of storage devices;
a unit to interpret the request and issue a command to the one of the set of storage devices, to access the encrypted data; and
a unit to provide an encryption key to decipher the encrypted data from the one of the set of storage devices.

10. The hardware key of claim 9, operable with a Redundant Array of Independent Disks (RAID) subsystem.

11. The hardware key of claim 10, wherein the unit to control data access to the set of storage devices comprises a unit to control the RAID subsystem.

12. The hardware key of claim 11, wherein the unit to control the RAID subsystem, comprises one of a controller and a software instance.

13. The hardware key of claim 11, wherein the RAID subsystem is to be coupled to the hardware key via a AT Attachment (ATA) interface.

14. The hardware key of claim 13, further comprising:
the hardware key; and
a unit to intercept a reply from the storage device, the reply including encrypted data from the storage device, and to decipher the encrypted data.

15. The hardware key of claim 14, wherein the hardware key comprises a USB key.

16. The hardware key of claim 14, wherein the unit to provide the encryption key comprises a unit to access a separate encryption key to decipher the encryption key used to decipher the encrypted data.

17. A machine-readable medium having stored thereon a set of instructions which when executed perform a method comprising:
a hardware key intercepting a request sent from a host to a storage device to access data stored on one of a set of storage devices, wherein the data stored on the storage device has been encrypted, the hardware key configured to be plugged into a port of the host and comprising a unit to control data access to the set of storage devices;
the hardware key interpreting the request and issuing a command to the one of the set of storage devices, to access the encrypted data; and
the hardware key providing the encryption key to decipher the encrypted data from the one of the set of storage devices.

18. The machine-readable medium of claim 17, wherein the set of storage devices comprises a Redundant Array of Independent Disks (RAID) subsystem.

19. The machine-readable medium of claim 17, further comprising:
the hardware key intercepting a reply from the storage device, the reply including encrypted data from the storage device; and
the hardware key using the encryption key to decipher the encrypted data.

20. The machine-readable medium of claim 19, wherein accessing the encryption key comprises accessing a separate encryption key to decipher the encryption key used to decipher the encrypted data.

21. A computer program which when run on a system comprising a host, a hardware key and a set of storage devices causes the system to implement the method of any one of claims 1 to 8.

22. A carrier carrying a program according to claim 21.

23. A carrier according to claim 22 which is a machine readable medium.
